# EUROPÄISCHE PATENTSCHRIFT

(11) **EP 2 310 343 B1**
(45) Veröffentlichungstag und Bekanntmachung des Hinweises auf die Patenterteilung: **12.02.2020**
(21) Anmeldenummer: 09761507.4
(22) Anmeldetag: 12.06.2009
(51) Int. Cl.: C05F 17/02, C05F 17/00, C05F 11/02, C05F 11/04, C05F 11/06

(54) **ÖKOTECHNISCHE ANLAGE UND VERFAHREN ZUR HERSTELLUNG VON KULTURSUBSTRATEN UND BODENHILFSSTOFFEN UND ORGANISCHEN DÜNGERN MIT EIGENSCHAFTEN ANTHROPOGENER TERRA PRETA**
ECOTECHNICAL INSTALLATION AND METHOD FOR THE PRODUCTION OF CULTIVATION SUBSTRATES, SOIL AMENDMENTS, AND ORGANIC FERTILIZERS HAVING PROPERTIES OF ANTHROPOGENIC TERRA PRETA SOIL
INSTALLATION ÉCOLOGIQUE ET PROCÉDÉ DE FABRICATION DE SUBSTRATS DE CULTURE, D'ADJUVANTS POUR SOL ET D'ENGRAIS ORGANIQUES PRÉSENTANT DES PROPRIÉTÉS ANTHROPOGÉNIQUES DE TERRA PRETA (TERRE NOIRE)

(30) Priorität: 13.06.2008 DE 102008028144; 18.06.2008 DE 102008028907
(43) Veröffentlichungstag der Anmeldung: 20.04.2011
(73) Patentinhaber: Palaterra GmbH & Co. KG, 67822 Hengstbacherhof (DE)
(72) Erfinder: BÖTTCHER, Joachim, 67822 Hengstbacherhof (DE)
(74) Vertreter: Patentanwälte Dr. Keller, Schwertfeger Partnerschaft mbB
(86) Internationale Anmeldenummer: PCT/EP2009/004228
(87) Internationale Veröffentlichungsnummer: WO 2009/149944

(56) Entgegenhaltungen:
- EP-A1- 1 739 067
- WO-A1-86/00293
- WO-A1-2009/021528
- DE-A1- 3 623 242
- FR-A1- 2 288 719

## Beschreibung

### Geänderte Beschreibung:

Ökotechnische Anlage und Verfahren zur Herstellung von Kultursubstraten und Bodenhilfsstoffen und organischen Düngern mit Eigenschaften anthropogener Terra Preta.

### Technisches Gebiet:

Die vorliegende Erfindung betrifft eine ökotechnische Anlage zur Herstellung von Kultursubstraten und Bodenhilfsstoffen und organischen Düngern mit Eigenschaften anthropogener Terra Preta sowie ein Verfahren zur Herstellung von Kultursubstraten oder Bodenhilfsstoffen oder organischen Düngern mit Eigenschaften anthropogener Terra Preta. Ferner betrifft die Erfindung die Verwendung des Verfahrens oder der Anlage zur Verwertung von unbelasteten organischen Biomassen, Bioabfällen, Schmutz- und Abwässern, mineralischen Stoffen zu Strom, Wärme und/oder Kultursubstraten mit Eigenschaften anthropogener Terra Preta. Schließlich betrifft die Erfindung auch eine Kreislaufanlage im Sinne eines nachhaltigen Stoffstrommanagements zur Verwertung von unbelasteten organischen Biomassen, Bioabfällen, mineralischen Stoffen usw. zu Strom, Wärme, Brauchwasser und Kultursubstraten oder Bodenhilfsstoffen oder organischen Düngern, wie in den beiliegenden Ansprüchen beansprucht.

### Stand der Technik:

Der Begriff "Terra Preta" bzw. "Terra Preta do indio" (portugiesisch für "schwarze Erde") bezeichnet eine anthropogene Schwarzerde, die von Archäologen im Bereich alter Siedlungsspuren im Amazonasgebiet entdeckt wurde. Sie besteht aus einer Mischung von organischen Abfällen, Knochen, Tonscherben, Holzkohle usw. und wurde schon vor mehr als 2000 Jahren in einem speziellen Verfahren von Menschenhand hergestellt. Aufgrund ihrer hohen Fruchtbarkeit wird die Terra Preta als das "schwarze Gold des Amazonas" bezeichnet.
Die Kultivierung dieser Erde ermöglichte es den brasilianischen Ureinwohnern, trotz nährstoffarmer Böden reiche Ernten einzubringen. Die Regenwälder Amazoniens zeigen zwar ein grünes und üppiges Antlitz, die Vegetation täuscht jedoch darüber hinweg, dass es in den Böden kaum Humus und nur wenig Nährstoffe gibt.
Die Böden (Oxisol) sind eher nährstoffarm und insbesondere für Ackerbau nur ungenügend geeignet. Nur das natürliche Kreislaufsystem des Regenwalds erhält ein komplexes "Stoffmanagement" aufrecht, welches Pflanzen und Tierwelt versorgt. Ist der Regenwald jedoch verschwunden, sind die Böden in kürzester Zeit völlig unfruchtbar. Amazonien gilt somit als "nasse Wüste", die nur wenigen Menschen Nahrung bieten kann.

Umso erstaunlicher war, was der Konquistador Francisco de Orellana 1542 gesehen haben will, als er den Amazonas erkundete: große Siedlungen, waffenstarrende Massen von Kämpfern mit langen Haaren. Der Spanier hielt sie für Frauen, daher der Name "Amazonas". Historiker gingen lange Zeit davon aus, dass de Orellana frei erfunden hat. Nach ihm hat niemand mehr viele Menschen im Amazonasgebiet gesehen, wovon sollten sie sich auch ernähren? Heute gehen Archäologen jedoch davon aus, dass de Orellana Recht hatte. Die von den Indianern hergestellte Bodenform "Terra Preta do Indio" hatte fruchtbares Land und somit die Grundlage für größere Bevölkerungsdichten im Amazonasgebiet geschaffen. Nach neusten wissenschaftlichen Erkenntnissen kann davon ausgegangen werden, dass das Amazonasgebiet mehrere tausend Jahre lang von Hochkulturen mit großen Siedlungen besiedelt war und 5 bis 6 Millionen Menschen beherbergte.
Mit den Hochkulturen verschwand auch ihr Wissen um die Terra Preta. Erst gegen Ende des 20. Jahrhunderts entdeckten Archäologen das "schwarze Gold das Amazonas". Seine Fruchtbarkeit ist bis heute erhalten geblieben und weltweit einzigartig.

Im Gegensatz zu den frühen Hochkulturen im Amazonasgebiet gibt es die Terra Preta an zahlreichen Orten heute noch; sie ist so fruchtbar, dass sie beispielsweise als Blumenerde verkauft wird. Jene Kulturen, welche die Terra Preta einst geschaffen haben, könnten an den durch die Europäer eingeschleppten Krankheiten zugrunde gegangen sein.

Verschiedene Forschungsarbeiten haben gezeigt, dass Terra Preta mehr ist als eine bloße Vermischung der bekannten Inputmaterialien. Auch ist mittlerweile wissenschaftlich bewiesen, welches außerordentliche Potenzial in diesen Böden steckt. Jedoch sind künstliche Herstellungstechniken zur Herstellung dieses wertvollen Bodens bis heute weitgehend unbekannt.

Weitere positive Effekte der Terra Preta im Hinblick auf Substrate und gartenbaulich oder landwirtschaftlich genutzte Böden liegen in der hohen Wasserspeicherfähigkeit, Kationenaustauschkapazität, Pufferfähigkeit für Pflanzennährstoffe sowie in der guten Durchlüftung. Alles Eigenschaften, die die Qualität von Kultursubstraten und Böden entscheidend mitbestimmen.

Dem Erfinder ist es gelungen, die wesentlichen Prozesse der Bodenbildung von Terra Preta zu identifizieren und zu reproduzieren. Das Ergebnis ist ein Kultursubstrat, das auch unter europäischen Verhältnissen in kurzer Zeit Wirkungsmechanismen entfaltet, die denen der ursprünglichen "Terra Preta do indio" entsprechen.

Bisherige Techniken, welche im Stand der Technik bekannt sind, vermögen es nicht, ein Kultursubstrat oder Bodenhilfsstoff herzustellen, das Eigenschaften denen der anthropogenen Terra Preta besitzt. Solche Verfahren sind beispielsweise in der US 6,200,475 B, EP 0 168 556 A, WO 01/00543 A und der EP 0 676 385 A beschrieben.

Die WO 2009/021528 A1 betrifft ein Verfahren zur Herstellung von stabilen humus- und nährstoffreichen sowie wasserspeichernden Ton-Bodensubstraten mit Eigenschaften anthropogener Bodenformen (Terra Preta). Bei dem Verfahren wird pyrogener Kohlenstoff mit leicht zersetzbarer organischer Biomasse vermischt und ein Fermentationsprozesses unter Anwesenheit von Mikroorganismen durchgeführt. Ferner wird eine Vorrichtung zur Herstellung von Boden oder Bodensubstraten aus stabilen humus- und nährstoffreichen sowie wasserspeichernden Ton-Humus-Komplexen mit Eigenschaften anthropogener Bodenformen (Terra Preta) offenbart. Die Vorrichtung umfasst eine Fermentationsanlage, die Einrichtungen zum kontrollierten Flüssigkeits- und Gasaustritt und/oder zur Aufrechterhaltung einer konstanten Temperatur besitzt.

Die EP 1 739 067 A1 betrifft ein Verfahren zur Herstellung eines Bodenhilfsstoffs. Bei dem Verfahren wird eine Holzkohle mit einer mittleren Korngröße ≤ 25 mm bereitgestellt, wobei die Holzkohle mit Wasser und Pflanzennährstoffen in Kontakt gebracht wird, um ein Wachstumsmedium zu erhalten. Das Wachstumsmedium wird mit Bodenmikroorganismen in Kontakt gebracht, um ein Kulturmedium zu erhalten. Das Kulturmedium wird dann bei Temperaturen zwischen 25 bis 37 C° für mindestens drei Tage inkubiert.

Die DE 36 23 242 A1 betrifft ein Verfahren zur Behandlung von hochbelasteten und organisch abbaubaren, stickstoffreichen Abwässern, wobei ein Düngemittelsubstrat gewonnen werden kann. Bei dem Verfahren werden Gülle, Deponiesickerwässer, Schlachthofabfälle und Abwässer von Tierkörperbeseitigungsanlagen über ein stickstoffarmes Haufwerk unter anaeroben Bedingungen mehrfach geführt, wobei das Haufwerk organisch abbaubar und mit Bakterien besiedelt ist. Anschließend wird das Haufwerk unter aeroben Bedingungen und unter Wärmebildung kompostiert. Aus dem abgebauten und kompostierten Haufwerk wird das Düngemittelsubstrat gewonnen.
Die FR 2 288 719 A1 betrifft ein Verfahren zur Behandlung von Gülle. Bei diesem Verfahren wird die Gülle mit Stroh gemischt. Diese Mischung wird einer aeroben Vorfermentation gefolgt von einer anaeroben Fermentation unterzogen. Ferner wird eine Vorrichtung zur Durchführung des Verfahrens offenbart, wobei alle Stufen des Verfahrens in einem Gastank durchgeführt werden, der Teil der Vorrichtung ist.

Die WO 86/00293 A1 betrifft ein Verfahren zur Herstellung von keim- und medikamentenrückstandsfreiem, biologischem, humusbildendem Dünger und eine Vorrichtung zur Durchführung des Verfahrens. Das Verfahren ist mehrstufig ausgestaltet. In einer ersten Stufe wird das mit bakterienhaltiger Flüssigkeit versetzte Ausgangsmaterial einem sich kontinuierlich und gleichförmig bewegenden Massestrom zugesetzt. Nach bestimmten Zeitabschnitten wird jeweils ein Teil und am Ende der Behandlung gegebenenfalls der Rest der bakterienhaltigen Flüssigkeit entzogen. In der zweiten Stufe wird das vorzugsweise teilweise von Flüssigkeit befreite Produkt der ersten Stufe mit einer weiteren bakterienhaltigen Flüssigkeit versetzt und einer Fermentation unterzogen. In beiden Stufen werden anfallenden Gase abgezogen und teilweise wieder eingeleitet. Nach Abschluss der Fermentation wird die erhaltene Biomasse erhitzt und durch eine Trocknungsanlage geschickt, in welcher ihr die Restfeuchtigkeit weitestgehend entzogen wird. Die so erhaltene Masse ist der Dünger.

### Kurze Beschreibung der Erfindung:

Es ist daher Aufgabe der vorliegenden Erfindung, eine Anlage und ein Verfahren bereitzustellen, mit der/dem es möglich ist, eine ökologisch und wirtschaftlich effiziente Verwertung von unbelasteten organischen Biomassen, Bioabfällen, Schmutz- und Abwässern, mineralischen Stoffen usw. zur Erzeugung von Strom, Wärme, Brauchwasser und Terra Preta als Kultursubstrat und Bodenhilfsstoff und organischen Dünger vorzunehmen und ein Kultursubstrat oder Bodenhilfsstoff oder organischen Dünger zu liefern, das/der Eigenschaften der anthropogenen Terra Preta besitzt.

Diese Aufgabe wird gelöst durch eine ökotechnische Anlage mit den Merkmalen des Anspruchs 1 sowie einem Verfahren zur Herstellung von Kultursubstraten oder Bodenhilfsstoffen oder organischen Düngern mit Eigenschaften anthropogener Terra Preta gemäß Anspruch 9.

Bei der erfindungsgemäß hergestellten Terra Preta handelt es sich um ein nährstoffreiches Humussubstrat mit guten bodenbildenden Eigenschaften. Die Nährstoffe sind im Substrat stabil gebunden und werden deshalb nicht ausgewaschen. Sie werden über bestimmte Wirkungsmechanismen pflanzenbedarfsgerecht zur Verfügung gestellt, sodass die Pflanzen rundum mit Nährstoffen versorgt sind. Dies geschieht einerseits über sehr gute physikalische Eigenschaften (z.B. Kationenaustauschkapazität und Nährstoffspeicherfähigkeit) und andererseits über eine besonders ausgewogene Population von Mikroorganismen, die sich in ihrer Wirkung ergänzen.

Darüber hinaus weist die erfindungsgemäße Terra Preta im Gegensatz zu allen bisher bekannten Substraten und Bodenarten hervorragende bodenbildende Eigenschaften auf, wie z.B. Humusaufbau. Wenn beispielsweise ein gartenbaulich oder landwirtschaftlich genutzter Boden mit Terra Preta aufbereitet wird, dann werden die positiven Eigenschaften der Terra Preta auf den behandelten Boden übertragen. Die derart behandelten Böden behalten über viele Jahre ihre Wirkungskraft, z.B. Nährstoffspeicherung und Humusbildung.
Die erfindungsgemäße ökotechnische Anlage zur Herstellung von Kultursubstraten und Bodenhilfsstoffen und organischen Düngern mit Eigenschaften anthropogener Terra Preta umfasst mehrere Behandlungsstufen für unbelastete organische Biomassen, Bioabfälle, Schmutz- und Abwässer, mineralische Stoffe usw., die hier nachfolgend beschrieben werden. In einer ersten Stufe werden flüssige organische Biomassen, wie z.B. Gärreste, Gülle, Schlempe, Schmutz- und Abwässer, organische Sickerwässer usw. in der erfindungsgemäßen Anlage behandelt und verarbeitet. Diese erste Stufe beinhaltet wenigstens einen biologischen Austauschfilter, der in seiner Grundstruktur aus organischer Biomasse und mineralischen Materialien und inertem Kohlenstoff mit großem Porenvolumen wie Holzkohle oder HTC-Kohlenstoff besteht. Über diesen Filter wird die flüssige organische Biomasse geleitet.

In einer zweiten Stufe werden organischen Biomassen hygienisiert und von keimfähigen Samen befreit.

Diese zweite Stufe besteht aus wenigstens einer Intensivrotte, bei der eine Hygienisierung und Abtötung keimfähiger Samen durch Temperaturerhöhung erfolgt. Ferner führt die Temperaturerhöhung über Verdunstung zu einer Entwässerung des Gemisches.
In einer dritten Stufe werden die unbelasteten festen und flüssigen organischen Biomassen, Bioabfälle, Schmutz- und Abwässer, mineralischen Stoffe usw., einem anaeroben Fermentationsprozess ausgesetzt. Die anaerobe Fermentation, insbesondere die anaerobe Milchsäuregärung, ist ein essentieller Schritt bei der Herstellung des erfindungsgemäßen Kultursubstrats oder Bodenhilfsstoffes oder organischen Düngers. Bevorzugt ist die anaerobe Milchsäuregärung.
In einem weiteren Schritt erfolgt eine Trocknung und gegebenenfalls pH-Neutralisierung der fermentierten Biomasse. Auch können weitere Zuschlagstoffe zur Anpassung der Produkteigenschaften an den gewünschten Verwendungsschritt zugegeben werden.

Die erfindungsgemäße ökotechnische Anlage besteht vorzugsweise aus einzelnen Mieten, Schüttungen, Behältern und/oder Boxen, in denen die einzelnen Verfahrensschritte durchgeführt werden.

### Detaillierte Beschreibung der Erfindung

In der erfindungsgemäßen Anlage werden sowohl flüssige als auch feste organische Biomassen verarbeitet. Als flüssige Biomassen eignen sich beispielsweise Gärreste aus einer Biogasanlage und/oder Gülle aus der Tierhaltung und/oder Schmutz- und Abwässer für die Herstellung von Terra Preta, da diese Stoffe hohe Anteile an Pflanzennährstoffen enthalten. In einer bevorzugten Ausführungsform werden diese flüssigen Inputstoffe zunächst in einer mechanischen Separationsstufe z.B. Bogensieb, Trommelsieb usw. vorgesiebt und in eine feste und eine flüssige Phase getrennt. In der festen Phase befinden sich vorwiegend Faserteile und gröbere partikuläre Bestandteile. Die feste Phase kann nun entweder separat unter Zugabe von pyrogenem Kohlenstoff und ggf. anderen Zuschlagstoffen zu einem Bodenhilfsstoff oder organischen Dünger mit Eigenschaften der anthropogenen Terra Preta weiter verarbeitet werden und/oder unter Umgehung der Austauschfilterstufe in die weiteren Prozessstufen der Terra Preta Herstellung, wie Intensivrotte und/oder Fermentationsstufe und/oder Trocknungsstufe eingebracht werden.

Die nach der Separation entstehende flüssige Phase besteht vorwiegend aus kleineren organischen Partikeln, Huminsäuren, organischen und anorganischen Nährstoffen und Wasser. Diese flüssige Phase wird nun in der Austauschfilteranlage behandelt, wobei die Flüssigkeit über die im Austauschfilter verwendeten festen organischen Biomassen und/oder mineralischen Materialien und/oder pyrogenen Kohlenstoffe und/oder einem Gemisch derselben gleichmäßig verteilt wird.
Der Austauschfilter besteht vorzugsweise aus 5 bis 30 Vol.-% inerter Kohlenstoff mit großen Porenvolumen oder einem Substitut desselben, 1 bis 30 Vol.-% mineralischen Bestandteilen und 40 bis 94 Vol.-% organischer Biomasse.

In der Austauschfilterstufe findet eine Filterung, Adsorption, Absorption und/oder biologischchemische Umwandlung der partikulären organischen Bestandteile sowie der Pflanzennährstoffe aus der flüssigen Biomasse statt. Dabei werden die partikulären organischen Bestandteile und Pflanzennährstoffe der flüssigen Biomasse an die im Austauschfilter verwendeten festen organischen Biomassen und/oder mineralischen Materialien und/oder inertem Kohlenstoff mit großem Porenvolumen und/oder einem Gemisch derselben gebunden.

Je nach Zumischung weiterer Zuschlagstoffe in die flüssigen Biomassen oder in das Austauschfiltermaterial kann die Art und Zusammensetzung des Endproduktes variieren, sodass entweder ein Kultursubstrat, Bodenhilfsstoff oder organischer Dünger herstellbar ist.

Beispielsweise kann der flüssigen Biomasse vor und während der Behandlung in der Austauschfilterstufe Magnesiumchlorid (MgCl2) zudosiert werden, wodurch sich mit dem in der Flüssigkeit enthaltenen Phosphor und Ammonium größere, stabile, kristalline Magnesiumammoniumphosphat-Moleküle (MAP) bilden, welche im Austauschfilter sehr gut zurückgehalten werden und einen guten Pflanzendünger ergeben.

In einer weiteren bevorzugten Ausführungsform können mehrere Austauschfilterstufen nacheinander in Reihe folgen, die aus festen organischen Biomassen und/oder mineralischen Materialien und/oder inertem Kohlenstoff mit großem Porenvolumen und/oder einem Gemisch derselben bestehen und von der flüssigen Biomasse nacheinander in Reihe durchströmt werden. Dadurch wird die Filter-, Absorptions- und Adsorptionsleistung der Austauschfilteranlage erhöht. Die Aufbringung der flüssigen Biomasse auf die Austauschfilter erfolgt vorzugsweise mit Verteilersystemen, welche eine gleichmäßige Verteilung auf der Filteroberfläche gewährleisten, wie beispielsweise Verteilerrohre mit Öffnungen oder bewegliche Verteilerwagen mit Verteilerrohren mit Öffnungen.

Die Beaufschlagung der Austauschfilter mit flüssigen Biomassen erfolgt mindestens einmal und/oder öfters und ist von der Filter-, Absorptions- und Adsorptionsleistung der verwendeten festen Filtermaterialien abhängig. Nach Erreichung der Filter-, Absorptions- und Adsorptionsleistung eines Austauschfilters wird das beladene Material entnommen und in die nachfolgenden Behandlungsstufen, wie Intensivrotte und/oder Fermentationsstufe und/oder Trocknungsstufe verbracht und/oder die nachfolgenden Behandlungsstufen werden in Gang gesetzt. Befinden sich unterschiedliche Filtermaterialien in den Austauschfilterstufen, kann bei der Verbringung in die folgenden Behandlungsstufen darauf geachtet werden, dass dort ein geeignetes Mischungsverhältnis gegeben ist. Nach Entnahme des beladenen Filtermaterials wird der Austauschfilter wieder mit frischem Filtermaterial gefüllt.

In einer weiteren bevorzugten Ausführungsform können die flüssigen Biomassen ohne Vorschaltung einer Separation direkt auf die Austauschfilter aufgebracht werden.

Als feste Biomassen eignen sich alle unbelasteten organischen Biomassen mit einem Flüssigkeitsanteil unter 80%, wie Baum- und Strauchschnitt, Grünschnitt, Stroh, Erntereste, Presskuchen, Trester, Festmist, Bioabfall, Kompost, Fäkalien usw.
Diese Biomassen können zunächst als Filtermaterial in der Austauschfilteranlage eingesetzt werden und/oder gleich in die nachfolgenden Behandlungsstufen eingebracht werden. Zur Herstellung des erfindungsgemäßen Kultursubstrats oder Bodenhilfsstoffes oder organischen Düngers muss jedoch mindestens die Fermentationsstufe durchlaufen werden.

Enthalten die festen Biomassen größere, grobe, verklebte und/oder verklumpte Bestandteile, so können sie vor der Weiterverarbeitung in den beschriebenen Behandlungsstufen geschreddert, zerkleinert und/oder gesiebt werden.
Enthalten die festen Biomassen Störstoffe, wie Glas, Kunststoff, Metall usw., dann können sie vor der Weiterverarbeitung in den beschriebenen Behandlungsstufen sortiert, gesiebt, windgesichtet usw. werden, um diese Störstoffe zu entfernen. Eine Entfernung der genannten Störstoffe ist aber auch nach dem Durchlaufen der Behandlungsstufen möglich.

Ein geeigneter inerter Kohlenstoff mit großem Porenvolumen kann innerhalb der Anlage mit geeigneter Technik selbst für den Prozess hergestellt werden. Geeignete Techniken zur Herstellung des inerten Kohlenstoff mit großem Porenvolumen können verschiedene Verfahren sein, wie beispielsweise die Pyrolyse oder hydrothermale Karbonisierung. Die Pyrolyse ist bevorzugt für trockenere, ligninhaltige Biomassen geeignet, während die hydrothermale Karbonisierung für feuchte, weiche Biomassen geeignet ist. Die geeignete Technik zur Herstellung des inerten Kohlenstoffs mit großem Porenvolumen ist standortspezifisch zu entscheiden und hängt maßgeblich von den zu verarbeitenden Biomassen ab.

In einer bevorzugten Ausführungsform wird Baum- und Strauchschnitt und Grünschnitt geschreddert und gesiebt. Während die feine Siebfraktion direkt in die Behandlungsstufen Austauschfilter und/oder Intensivrotte und/oder Fermentationsstufe und/oder Trocknungsstufe eingebracht werden kann, wird die grobe Siebfraktion in einer Pyrolyseanlage behandelt. Beim Pyrolyseprozess entsteht unter Luftabschluss bei einer Temperatur von etwa 500 °C pyrogener Kohlenstoff und Pyrolysegas. Während der pyrogene Kohlenstoff als inerter Kohlenstoff mit großem Porenvolumen in die Behandlungsstufen zur Herstellung von Kultursubstrat und/oder Bodenhilfsstoff und/oder organischer Dünger eingebracht wird, kann das Pyrolysegas beispielsweise über das Flox-Verfahren überwiegend bzw. vollständig flammenlos oxidiert werden. Bei der flammlosen Oxidation werden durch eine hohe Abgas-/Luft-Vormischung Spitzentemperaturen in der Flamme vermieden und eine thermische Stickoxidbildung (NOₓ), auch bei einer hohen Luftvorwärmung, fast vollständig unterdrückt. Durch die Herabsetzung der Spitzentemperatur der Feuerung wird eine Reduktion der Emissionen erreicht. Das entstehende Pyrolysegas kann jedoch auch anderweitig verwertet werden z.B. durch Blockheizkraftwerke, Gasthermen, Gaskocher usw.

Sowohl Flox-Verfahren, Blockheizkraftwerk als auch Gastherme liefern Wärmeenergie, die innerhalb der Behandlungsstufen beispielsweise zur Optimierung der Prozesse eingesetzt werden kann und/oder innerhalb der Herstellungsanlage zu Heizzwecken verwendet wird. Das Flox-Verfahren kann zusätzlich mit einem Stirlingmotor ausgestattet werden und liefert dann elektrische Energie. Das Blockheizkraft liefert ebenfalls elektrische Energie.

In einer weiteren bevorzugten Ausführungsform wird feuchte, weiche Biomasse in eine hydrothermale Karbonisierungsanlage eingebracht. Dabei wird die Biomasse mit Flüssigkeit in einen luftdicht verschlossenen Druckbehälter eingebracht und einer Temperatur von über 100 °C ausgesetzt. Dabei entsteht eine exotherme Reaktion die kurzfristig enorme Energien in Form von Druck und Wärme freisetzt. Die Wärmeenergie kann wiederum innerhalb der Behandlungsstufen beispielsweise zur Optimierung der Prozesse eingesetzt werden kann und/oder innerhalb der Herstellungsanlage zu Heizzwecken verwendet werden und/oder zu elektrischer Energie umgeformt werden. Im Druckbehälter verbleibt ein inerter Kohlenstoff mit großem Porenvolumen sowie Restflüssigkeit. Anschließend kann eine Fest-Flüssigtrennung erfolgen, wobei der inerte Kohlenstoff danach in die Behandlungsstufen eingebracht wird.

In einer weiteren bevorzugten Ausführungsform kann der inerte Kohlenstoff einschließlich der Restflüssigkeit über die Austauschfilterstufe behandelt werden, wo wiederum eine Fest-Flüssig-Trennung stattfindet und der Kohlenstoff im Filtermaterial verbleibt und anschließend in die weiteren Behandlungsstufen verbracht wird.

Der Austauschfilter, die Intensivrotte und/oder die Fermentationsstufe sind vorzugsweise als Boxen und/oder Behälter und/oder Mieten, vorzugsweise Flächenmieten oder Dreiecksmieten ausgelegt. Dabei können Filtration, Intensivrotte, Fermentation und/oder Trocknung in derselben/demselben Box, Behälter, Flächenmiete und/oder Dreiecksmiete im Batch-Verfahren durchgeführt werden. Mit anderen Worten: Dieselbe/derselbe Box, Behälter, Flächen- oder Dreiecksmiete wird für sämtliche Verfahrensschritte verwendet. Alternativ kann die Filtration, Intensivrotte, Fermentation und/oder Trocknung in getrennten Boxen, Behältern, Flächen- und Dreiecksmieten durchgeführt werden.

In einer großen Anlage sind mehrere Austauschfilter, Intensivrotten, Fermentationsstufen und gegebenenfalls Trocknungsmieten vorgesehen, sodass ein hoher Umsatz bei den so herstellten Kultursubstraten und/oder Bodenhilfsstoffen und/oder organischen Düngern erreicht wird.

Da in den einzelnen Boxen, Behältern und/oder Mieten eine Entwässerung stattfinden soll, ist die Bodenplatte vorzugsweise mit Sickeröffnungen versehen oder in einer weiteren bevorzugten Ausführungsform V-förmig ausgebildet. Je nach Ausführungsform werden die Flüssigkeiten vorzugsweise in einer Wanne unterhalb der Sickeröffnungen gesammelt oder sie münden in eine zentrale Entwässerungsrinne. Diese Entwässerungsrinne führt vornehmlich zu einem Sammelschacht oder einem Lagerschacht für Flüssigkeit.

Die über das Entwässerungssystem zum Sammelschacht geführte Flüssigkeit kann auch für mehrere Zyklen zur Nährstoffeliminierung dem Austauschfilter oder anderen Behandlungsstufen zugeführt werden. Im Sammelschacht und/oder in den Sammelschächten sammelt sich im Wesentlichen von Nährstoffen befreite Flüssigkeit.

In einer bevorzugten Ausführungsform dienen die Entwässerungsvorrichtungen und/oder Entwässerungsrinnen gleichzeitig der Belüftung des darüber befindlichen Prozesses. Für einen optimierten Produktionsablauf ist daher vorgesehen, dass die Boxen, Behälter und/oder Mieten mit regelbaren Belüftungs-/Entlüftungssystemen und/oder Entwässerungssystemen ausgerüstet sind. Um die Regelbarkeit sicherzustellen, sind am Anfang und am Ende der Entwässerungsstrecke in den einzelnen Boxen, Behältern und/oder Mieten Schiebregler vorgesehen.

Zur weiteren Optimierung des Produktionsprozesses beispielsweise für die Intensivrotte und/oder Fermentation können die Boxen, Behälter und/oder Mieten mit beheizbaren Böden und/oder Wärmeschläuchen zur Beheizung und Temperaturregelung ausgestattet sein. Dabei ist vorzugsweise ein zusätzlicher Pufferspeicher als Wärmespeicher für die Wärmeschläuche vorgesehen, in welchem die benötigte Wärmeenergie zwischengespeichert werden kann. Die benötigte Wärmeenergie kann in einer bevorzugten Ausführungsform beim voran beschriebenen Pyrolyseprozess und/oder bei der hydrothermalen Karbonisierung gewonnen werden.

In einer ebenfalls bevorzugten Ausführungsform kann die Wärmeenergie über Solarthermieanlagen gewonnen werden. In einer ebenfalls bevorzugten Ausführungsform kann die Wärmeenergie über eine Biogasanlage und/oder ein Blockheizkraftwerk gewonnen werden. Im Sinne der Nutzung von Synergieeffekten und einer nachhaltigen Kreislaufwirtschaft sollen sich die Wärmequellen möglichst innerhalb der Anlage und/oder in unmittelbarer Nähe zur Anlage befinden und/oder aus in der Umgebung vorhandenen Stoffströmen und/oder zumindest aus erneuerbaren Energien generiert werden.

Die Intensivrottephase dient der Hygienisierung und/oder Abtötung von keimfähigen Samen und/oder Wasserreduktion durch Verdunstung. Vorzugsweise werden die organische Biomassen und/oder mineralischen Materialien und/oder inerter Kohlenstoff mit großem Porenvolumen und/oder ein Gemisch derselben zur Durchführung der Rottephase zu einem kegelförmigen Spitzhaufen und/oder zu einer Dreiecksmiete aufgeschichtet. Dies geschieht per Handarbeit und/oder mit geeigneten Geräten, wie Förderband und/oder Radlader und/oder Dreiecksmietenumsetzer. Durch die Aufschüttung zu einem Spitzhaufen und/oder einer Dreiecksmiete wird eine möglichst große Oberfläche für die Luftzuführung und Verdunstung erreicht. Der Spitzhaufen und/oder die Dreiecksmiete können zur Optimierung des Rotteprozesses mehrfach gewendet oder durchmischt werden, wodurch frische Luft an die beim Rotteprozess vorwiegend beteiligten sauerstoffliebenden Mikroorganismen herangetragen wird.

Bei größeren Anlagen wird die Wendung und/oder Durchmischung der Mieten vorzugsweise mit Radladern und/oder Dreiecksmietenumsetzern vorgenommen.

In einer bevorzugten Ausführungsform werden die Spitzhaufen und/oder Dreiecksmieten zusätzlich über die Bodenplatten und/oder Belüftungsrinnen belüftet. Dies geschieht vorzugsweise mit Gebläsen, welche entweder Außenluft in die Bodenplatten und/oder Belüftungsrinnen einbringen und/oder Luft aus der Austauschfilterstufe und/oder Intensivrottestufe und/oder Fermentationsstufe und/oder Trocknungsstufe in die Bodenplatten und/oder Belüftungsrinnen einbringen.

Bei der Einbringung von Luft aus den genannten Behandlungsstufen entstehen folgende Synergieeffekte: Aus den Behandlungsstufen ausgegastes Ammoniak und CO₂ wird mit der Luft über die Bodenplatten und/oder Belüftungsrinnen in das Gemisch eingetragen und dort über biochemische Vorgänge zum Teil wieder in Ammonium und nichtgasförmige Kohlenstoffverbindungen umgewandelt. Dadurch werden die Verluste an Stickstoff aus dem Substrat deutlich verringert und weniger CO₂ in die Atmosphäre getragen.

Die Temperatur beträgt während der Intensivrotte vorzugsweise mehr als 60 °C, bevorzugt bis zu 70 °C. Bei diesen Temperaturen erfolgt eine Keimreduzierung, insbesondere von Salmonellen und pathogenen Keimen sowie eine Abtötung von keimfähigen Samen. Eine Temperaturerhöhung kann durch Zugabe von Rottebeschleunigern und/oder Zugabe von frischer Biomasse gefördert werden. In den Wintermonaten kann frische Biomasse beispielsweise aus Silagen generiert werden. Die Intensivrotte dauert zwischen drei und vierzehn Tagen. Die Intensivrotte kann vor oder nach dem Fermentationsprozess durchgeführt werden.

Zur Einleitung des Fermentationsprozesses werden vorzugsweise bestimmte Mikroorganismen und/oder Pilze in das Gemisch eingebracht. In einer bevorzugten Variante werden Milchsäurebakterien zugesetzt, welche im Gemisch einen anaeroben Milchsäuregärungsprozess in Gang setzen. Die Einbringung von Mikroorganismen und/oder Pilzen erfolgt vorzugsweise in flüssiger Form durch Aufsprühen und/oder Einmischen.

Wird der Fermentationsprozess in einer bevorzugten Variante in Boxen und/oder Behältern durchgeführt, dann werden die Deckel der Boxen und/oder Behälter vor Durchführung des Fermentationsprozesses luftdicht verschlossen. Findet der Fermentationsprozess in einer weiteren bevorzugten Variante in Mieten statt, dann wird die Miete hierzu flach und dicht gepresst und vorzugsweise mit einer Folie luftdicht abgedeckt. Sämtliche Belüftungssysteme werden geschlossen, sodass anaerobe Bedingungen sichergestellt sind.

Während der Fermentation sinkt der pH-Wert u.a. durch die Aktivität der Milchsäurebakterien ab. Die Fermentation wird vorzugsweise unter sauren Milieubedingungen durchgeführt, vorzugsweise bei einem pH-Wert kleiner/gleich 4. Die Temperatur während der Fermentation beträgt vorzugsweise zwischen 30 bis 40 °C. Die Dauer der Fermentation beträgt vorzugsweise zwischen einer und drei Wochen, bevorzugt eine bis zwei Wochen. Zu hohe Temperaturen sollten vermieden werden, da sich diese schädlich auf die Mikroorganismen auswirken können und den Prozess dadurch verlangsamen.

In der anschließenden Trocknungsphase erfolgt eine Feuchtigkeitsreduktion sowie Neutralisierung der fermentierten Biomasse. Auch in der Trocknungsphase wird die Biomasse vorzugsweise gelockert und/oder zu einem Spitzhaufen und/oder zu einer Dreiecksmiete aufgeschichtet. Durch die Zugabe von neutralisierenden Substanzen, wie Kalk, Zeolith, Bentonit, Ton, Sand, Lava und/oder Gesteinsmehl kann der pH-Wert reguliert werden und/oder die Qualität der Produkte an den Bedarf und/oder Einsatzzweck angepasst werden. Zusätzlich kann eine Belüftung durch Zugabe von Luft (bzw. Sauerstoff) erfolgen, wie das bereits für den Intensivrotteprozess beschrieben wurde. Falls sich in der Zuluft Ammoniak und/oder CO₂ aus den Vorstufen befinden, können diese wiederum im Gemisch zu Ammonium und stabilen Kohlenstoffverbindungen umgewandelt werden.

Am Ende des Prozesses erhält man ein Kultursubstrat und/oder einen Bodenhilfsstoff und/oder einen organischen Dünger, welche eine hohe Nährstoff- und Wasserspeicherkapazität aufweisen und den Eigenschaften der anthropogenen Terra Preta entsprechen.

Vorzugsweise ist bei der erfindungsgemäßen Anlage vorgesehen, dass die Mieten oder Rotten von einer Umhausung, vorzugsweise einem Gewächshaus, eingefasst sind. Die Umhausung sorgt für eine solare Erwärmung und Wärmeenergiespeicherung sowie Erhaltung der Temperatur. Daneben bietet die Umhausung einen Witterungsschutz (z. B. gegen Regen, Frost) und einen Emissionsschutz (die entstehenden Gase verbleiben im System und werden vorzugsweise und wertschöpfend in die Endprodukte eingelagert). Vorzugsweise ist vorgesehen, dass im oberen Bereich der Umhausung eine Absaugung der Luft erfolgt, welche über Gebläse wieder von unten über Belüftungssysteme in Boxen und/oder Behälter und/oder Mieten eingeblasen wird. Die Umhausung ist daher vorzugsweise mit Entlüftungssystemen ausgestattet.

In einer bevorzugten Ausführungsform werden die Dächer der Umhausung teilweise mit Photovoltaikmodulen zur Stromgewinnung und/oder mit Solarthermiemodulen zur Wärmegewinnung ausgestattet. Dies ist ein weiterer wertvoller Synergieffekt im Sinne einer nachhaltigen Kreislaufwirtschaft.

In einer weiteren Ausführungsform umfasst die erfindungsgemäße Anlage zusätzlich einen Bodenfilter am Außenrand der Umhausung und/oder in räumlicher Nähe zur Anlage. Der Bodenfilter ist vorzugsweise als Hochbeet ausgeführt. In einer weiteren bevorzugten Ausführungsform ist der Bodenfilter als Erdbecken oder mit Dämmen ausgeführt. Der Bodenfilter ist vorzugsweise mit mehrjährigen Nutzpflanzen bepflanzt, wie beispielsweise Miscanthus, Bambus, Gräser, Obst, Beeren usw. die eine Wertschöpfung generieren. Der Bodenfilter enthält an der Sohle eine Belüftungs- und Entwässerungsdrainage. Vorzugsweise ist die Belüftungs- und Entwässerungsdrainage mit dem Entlüftungssystem der Umhausung verbunden. Dadurch kann verbrauchte und/oder überschüssige Luft aus den Behandlungsstufen in der Umhausung in die Belüftungs- und Entwässerungsdrainage des Bodenfilters eingebracht werden. Durch einen Überdruck im Rohr strömt Luft durch das Hochbeet nach oben, was einerseits zu einer wachstumsfördernden Durchlüftung des Bodenfilters und andererseits zu einer biologischen Reinigung der Luft ähnlich einem Biofilter führt. Das Bodenfiltermaterial selbst besteht vorzugsweise aus dem hergestellten Terra Preta-Kultursubstrat. Bakterien im Kultursubstrat können die entweichenden Gase biologisch reinigen.

In einer weiteren bevorzugten Ausführungsform dient der Bodenfilter gleichzeitig der Behandlung von überschüssigen und/oder verunreinigten Flüssigkeiten aus dem Produktionsprozess. Dazu kann die überschüssige und/oder verunreinigte Flüssigkeit mit Verteilervorrichtungen, Rohren usw. auf den Bodenfilter aufgebracht werden. Beim Durchströmen des Bodenfilters wird die Flüssigkeit gefiltert und/oder biologisch durch die vorhandenen Mikroorganismen gereinigt. Über die Belüftungs- und Entwässerungsdrainage im Bodenfilter wird die gereinigte Flüssigkeit gesammelt und abgeführt. Vorzugsweise wird die Flüssigkeit als Brauchwasser im Produktionsprozess wieder verwendet und/oder für Bewässerungszwecke z.B. Energiepflanzenplantagen verwendet. Dadurch ergeben sich zusätzliche Synergien im Sinne einer nachhaltigen Kreislaufwirtschaft. Zugleich verhindert die Beaufschlagung der Flüssigkeiten auf den Bodenfilter eine Austrocknung, wie sie von normalen Biofiltern bekannt ist. Zudem wird durch die gute Bewässerung der Nutzpflanzen im Bodenfilter mit z.T. nährstoffhaltiger Flüssigkeit sowie durch die gute Belüftung das Pflanzenwachstum optimiert und die Erträge der Nutzpflanzen deutlich gesteigert. In einer weiteren bevorzugten Ausführungsform kann der Bodenfilter auch innerhalb der Umhausung integriert werden, wodurch das Pflanzenwachstum über kontinuierlichere Temperaturen nochmals gesteigert werden kann.

In einem weiteren Aspekt betrifft die vorliegende Erfindung eine Vorrichtung und Verfahren zur Herstellung von Kultursubstraten und/oder Bodenhilfsstoffen und/oder organischen Düngern mit Eigenschaften anthropogener Terra Preta, bei der keine flüssige Biomasse über einen Austauschfilter filtriert wird. In diesem Fall besteht der erste Verfahrensschritt direkt aus einer Intensivrotte und einer Fermentation, bei der beispielsweise eine anaerobe Milchsäuregärung unter Anwesenheit von Mikroorganismen, durchgeführt wird. Die Intensivrotte kann vor oder nach der Fermentation erfolgen. Ein Austauschfilter ist dann nicht notwendig, da keine flüssige Biomasse filtriert wird. Feste, fein gesiebte organische Biomasse wird vorzugsweise direkt mit inertem Kohlenstoff mit großen Porenvolumen vermengt, einer Intensivrotte ausgesetzt und für ca. ein bis zwei oder drei Wochen fermentiert. Anschließend wird die Biomasse in einer Trocknungsmiete für vorzugsweise etwa eine Woche getrocknet und neutralisiert, d.h. der in der Fermentation durch die Milchsäuregärung herrschende saure pH (etwa 4) wird auf neutrales Niveau angehoben.

Mit verschiedenen zusätzlichen Maßnahmen, wie Siebung, Zudosierung von Zuschlagstoffen und/oder organischen Pflanzennährstoffen aus dem Behandlungsprozess und/oder anderer Herkunft, natürlicher Mineralstoffe usw. können die Produkte Kultursubstrat, Bodenaktivator und/oder organischer Dünger optimiert und an die gewünschte Nutzung angepasst werden.

Des Weiteren können die Produkte manuell und/oder maschinell verpackt und/oder abgesackt werden.

Wissenschaftliche Untersuchungen haben gezeigt, dass die über die erfindungsgemäße Anlage bzw. Verfahren hergestellten Kultursubstrate bzw. Bodenhilfsstoffe wesentliche Produktvorteile aufweisen:
1. Verbessertes Pflanzenwachstum und Reduktion der Ausfallquoten bei Neupflanzungen; Reduzierung des Wasserbrauchs;
2. Geringerer Arbeitsaufwand für die Bewässerung;
3. Reduzierung des Düngeaufwands um bis zu 80 %;
4. Lange Nutzungsdauer durch geringe Nährstoffauswaschung;
5. Einfache Anwendung, auch die Einbringung in bestehende Kulturen ist möglich.
6. Nachhaltige Verbesserung von Böden und deren Eigenschaften durch Humusaufbau usw.

Die hier verwendeten Begriffe "Kultursubstrat" und "Bodenhilfsstoff" und "organischer Dünger" umfassen sämtliche Substrate, Erden, organische Dünger, Bodenverbesserungsstoffe, Bodenaktivatoren welche zur Verbesserung von Böden, Verwendung als Pflanzenträger in geschlossenen Systemen (Töpfen, Kübeln, Bottichen usw.), Düngung, Dachbegrünung, Innenraumbegrünung, Pflanzensubstrat, Jungpflanzenzucht, Blumenerde, Baumschulerde, Rebenveredelung usw. geeignet sind. Die Produkte können in loser Form als Schüttgut, in verpackter Form als Sackware, Big Packs oder ähnlichem in den Verkehr gebracht werden.

Die Anwendungsmöglichkeiten der erfindungsgemäß hergestellten Terra Preta sind sehr vielseitig. Das Humussubstrat kann als Pflanz- und Kultursubstrat für den Profigartenbau oder als Blumenerde für den Hobby-Gartenbereich eingesetzt werden.

Auch werden Anwendungsmöglichkeiten im Bereich des Intensivgartenbaus (Hochglas, Freiland), des Garten- und Landschaftsbaus (Bodenverbesserung, Dachbegrünung usw.) gesehen.

Weitere interessante Anwendungen stellen sich in der Landwirtschaft zur Verbesserung intensiv genutzter bzw. degradierter Böden dar.

Ferner soll an dieser Stelle auch auf die Potentiale und Anwendungsmöglichkeiten der Terra Preta für den globalen Umweltschutz und für eine globale Verbesserung der Nahrungsmittelversorgung hingewiesen werden.

Durch die hervorragenden Wasserspeicher- und Humusbildungseigenschaften können mit der Anwendung von Terra Preta aride Gebiete wieder fruchtbar gemacht werden (Eindämmung der globalen Wüstenbildung). Die sich dadurch etablierende Vegetation wird bei flaride Gebiete Anwendung eine positive Wirkung auf das globale Klima haben bzw. werden die Folgen des Klimawandels eingedämmt. Ein weiterer Aspekt wird in der stabilen Einbindung des klimaschädigenden Kohlendioxids in den Boden in Form von Dauerhumus gesehen (CO₂-Senkung).

Bei einer flächendeckenden Anwendung der Terra-Preta-Technologie in der Landwirtschaft entsteht eine größere Flächeneffizienz bei gleichzeitiger Schonung der Umwelt bzw. Reduktion der negativen Umweltauswirkungen durch die Landwirtschaft. Dadurch könnten weltweit mehr gesunde Nahrungsmittel produziert werden und gleichzeitig auch Biomasse z.B. für die energetische Nutzung.

Die derzeitig diskutierte Flächenkonkurrenz in der Landwirtschaft zwischen der Nahrungsproduktion und der Biomasseproduktion könnte durch Anwendung der Terra-Preta-Technologie gemindert werden.

In einer erfindungsgemäß gestalteten Terra Preta Anlage soll zur Erzeugung von regenerativer Energie eine industrielle Biogasanlage zur Vergärung von jährlich 50.000 Tonnen organischer Reststoffe wie beispielsweise Speise- und Pflanzenresten errichtet werden.

Die innovativen Techniken der Erfindung ermöglichen die vollständige Aufbereitung der Gärreste in ein vermarktungsfähiges und hochwertiges Humussubstrat und stellen somit eine intelligente Lösung des Entsorgungsproblems dar.

Die erfindungsgemäße ökotechnische Anlage zur Herstellung von Kultursubstraten, Bodenhilfsstoffen und organischen Düngern mit Eigenschaften anthropogener Terra Preta kann Bestandteil einer Gesamtanlage sein, die als Kreislaufanlage aufgebaut ist. Neben einem Terra Preta-Produktionswerk kann die Gesamtanlage eine Biogasanlage sowie eine nachgeschaltete Energiepflanzenplantage (z.B. Miscanthus) umfassen. Durch die Verkupplung Biogasanlage mit einem Terra Preta-Produktionswerk soll ein geschlossener Stoffstromkreislauf geschaffen werden, bei dem aus biogenen Abfällen Strom, Wärme und ein hochwertiges Humussubstrat erzeugt werden.

Die Behandlung der in der Biogasanlage entstehenden flüssigen Gärreste erfolgt über eine vorwiegend naturnahe Technologie, wobei die erfindungsgemäße Austauschfilteranlage eine maßgebliche Rolle spielt.

In der erfindungsgemäßen Anlage werden die Gärreste vorzugsweise zunächst über eine mechanische Separationsanlage geleitet, wobei eine Fest-Flüssig-Trennung stattfindet.

Während die dabei separierten Feststoffe direkt zur Weiterverarbeitung in die Terra Preta-Anlage gelangen, werden die flüssigen Bestandteile in der Austauschfilteranlage weiter behandelt. Dabei werden die verbliebenen Feststoffe und Nährstoffe aus der Flüssigkeit herausgefiltert und stehen nun ebenfalls für die Herstellung von Terra Preta zur Verfügung.

Nach der Behandlung in der Austauschfilteranlage zur Rückhaltung von partikulären organischen Stoffen und Nährstoffen kann die Flüssigkeit noch über eine Pflanzenkläranlage (Bodenfilter) geleitet werden, wobei die organische Verschmutzung noch weiter reduziert wird und die derart behandelte Flüssigkeit auch über längere Zeiträume zwischengelagert werden kann.

Unter dem Aspekt einer nachhaltigen Kreislaufwirtschaft sowie der Schließung von Stoffkreisläufen wird in einer erfindungsgemäßen Anlage das innovative Modell einer großflächigen Energiepflanzenplantage mit Chinagras (Miscanthus) integriert, wobei einerseits die in den überschüssigen Flüssigkeiten enthaltenen Restnährstoffe genutzt werden und andererseits eine optimale Wasserversorgung der Pflanzen gegeben ist. Es werden Biomasseerträge von über 300 Tonnen Frischmasse pro Jahr erwartet.

Das Ernteprodukt Miscanthus kann vielseitig eingesetzt werden, so z.B. als Hackschnitzel für Biomasseheizungen, zur Pelletproduktion oder als Struktur- und Fasermaterial für die Baustoffherstellung. Schwerpunktmäßig ist jedoch die Einbringung dieser Biomasse in den Herstellungsprozess zur Optimierung der Terra Preta vorgesehen.

Die erfindungsgemäße Biogasanlage kann Energie durch Vergärung organischer Reststoffe erzeugen.

Es ist vorgesehen, jährlich 50.000 Tonnen/Jahr an organischen Abfällen wie Speisereste, Pflanzenreste, Fettabscheider etc. einzusetzen. Zur Verwertung des entstehenden Biogases müssen Blockheizkraftwerke (BHKW) mit einer elektrischen Gesamtleistung von 1,5 MW installiert werden. Erträge werden durch die Einspeisung des Stromes in das öffentliche Stromnetz sowie durch Verkauf der thermischen Energie an ein angrenzendes Werk zur Herstellung von Holz-Pellets generiert.

Eine Herstellung des Terra Preta-ähnlichen Humussubstrats ist grundsätzlich überall möglich, wo organische Biomassen entstehen, anfallen bzw. vorhanden sind, beispielsweise in Biogasanlagen, Landwirtschaft, Gartenbau, Landschaftsbau und Landespflege, verarbeitendes Gewerbe, Weinbau, Brennerei, Molkerei, Tierhaltung, Kompostanlagen, Kläranlagen usw.

### Kurze Beschreibung der Zeichnungen:

Die Erfindung wird in den nachfolgenden Zeichnungen näher erläutert. Es zeigen:
- Fig. 1: in Draufsicht den Aufbau einer erfindungsgemäßen ökotechnischen Anlage zur Herstellung von Kultursubstraten und/oder Bodenhilfsstoffen und/oder organischen Düngern mit Eigenschaften anthropogener Terra Preta ;
- Fig. 2: eine Seitenansicht der in Fig. 1 gezeigten Anlage.

### Wege zur Ausführung der Erfindung und gewerbliche Verwertbarkeit:

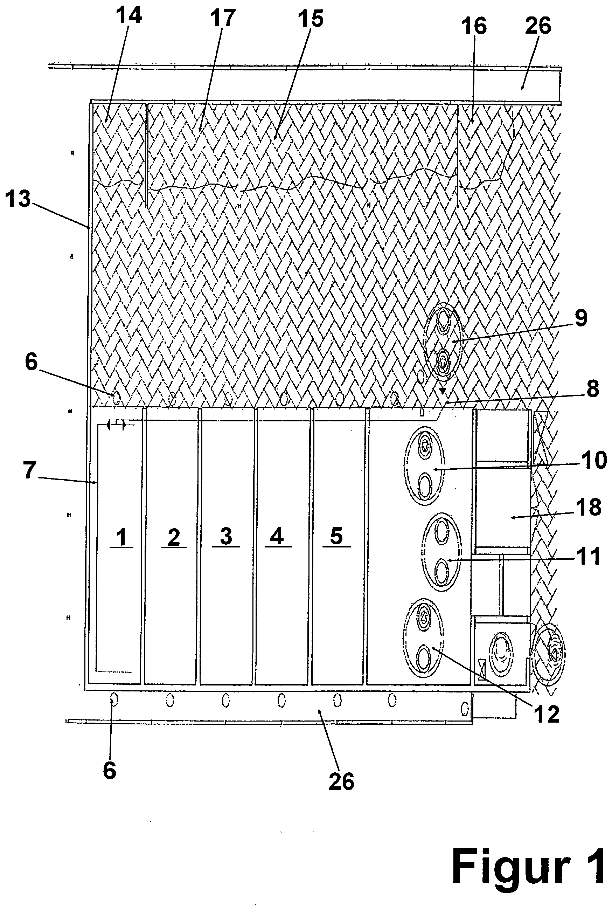

In Fig. 1 erkennt man in Draufsicht eine Grundrissdarstellung einer Ausführungsform einer erfindungsgemäßen ökotechnischen Anlage. In dieser Grundrisszeichnung sind die wesentlichen Bestandteile zur Herstellung von Kultursubstraten oder Bodenhilfsstoffen oder organischen Düngern mit Eigenschaften anthropogener Terra Preta dargestellt. Die Anlage kann als einzelnes Werk oder als Bestandteil einer Kreislaufanlage (zusammen mit einer Biogasanlage, Kompostanlage, Verarbeitungsanlage für organische Biomassen sowie einer Energiepflanzenplantage) aufgebaut sein.

Als Ausgangssubstrate für das erfindungsgemäße Verfahren dienen beispielsweise flüssige Gärreste und/oder Gülle und/oder Schmutz- und Abwässer, die in Lagerbehältern, Schächten, Tanks usw. zwischengelagert werden. Außerdem können feste Biomassen beispielsweise in Form von Grünschnitt, Festmist, Stroh, Hackschnitzel, Holzhäcksel, Kompost usw. eingesetzt werden, welche in Vorhaltezonen zwischengelagert werden. Diese feste Biomasse z.B. ungesiebter Grünschnitt wird zunächst zerkleinert (geschreddert) und gesiebt, sodass eine feiner und eine grober Siebanteil entsteht. Die fein gesiebte organische Biomasse (z.B. gesiebter Grünschnitt) wird in einem Vorhaltebereich 17 gelagert.
Neben den Biomassen können noch weitere Zuschlagstoffe eingesetzt werden, die substratverbessernde Eigenschaften aufweisen (z. B. Gesteine, Erden, Böden, Lava, Bims, Basalt, Ton, Lehm, Bentonit, Kalk, Sandsteingrieß usw.). Ferner ist die Zugabe mineralischer oder organischer Nährstoffe vorteilhaft; auch können organische Faserprodukte (z. B. Kokosfasern, Holzspäne, Torf usw.) hinzugegeben werden. Solche Zuschlagstoffe können in getrennten Vorhaltebereichen gelagert werden. Ein solcher Vorhaltebereich für Lava ist als Vorhaltebereich 16 gezeigt. Auch die weiteren für den Prozess notwendigen Bestandteile, wie inerter Kohlenstoff (z. B. Holzkohle, Braunkohle, Pyrolyseprodukte, HTC-Produkte) werden getrennt gelagert. In einer Mischzone 14 kann eine Vorvermischung für den Austauschfilter 1 stattfinden. Über eine Verteilervorrichtung 24 wird die flüssige Biomasse auf den Austauschfilter 1 aufgebracht.

Das eigentliche Terra Preta-Produktionsverfahren findet in den Mieten der Zonen 1, 2, 3, 4, 5 statt. Im Austauschfilter 1, hier gezeigt als einzelne Miete, findet eine Vermischung der fein gesiebten organischen Biomasse mit dem im Pyrolyseprozess erzeugten inerten Kohlenstoff, vorzugsweise Holzkohle, statt. Der pyrogene Kohlenstoff (Holzkohle) wird in einer Pyrolysevorrichtung 18 hergestellt. Die Pyrolysevorrichtung 18 umfasst einen Flox-Brenner, bei dem die Pyrolyse bei Temperaturen etwa 500 °C stattfinden kann. Die Verbrennung erfolgt vollständig oder überwiegend flammlos, wodurch der Grad der Emissionen auf ein Minimum gehalten werden kann.

Zusätzlich können flüssige organische Biomassen, wie Gärreste, Schmutz- und Abwässer, Gülle usw. zugemengt werden, die in einem Lagerschacht 9 zwischengelagert werden. Über eine Entwässerungsrinne 7 erfolgt eine Abführung der Flüssigkeit zu einem Sammelschacht 10 oder zurück in den Lagerschacht 9. Die einzelnen Entwässerungssysteme 7 der Mieten 1, 2, 3, 4, 5 sind über entsprechende Rohrleitungen 8 mit dem Lagerschacht 9 bzw. Sammelschacht 10 verbunden. Die Entwässerung und/oder Belüftung der einzelnen Mieten erfolgt über verschließbare Schieberöffnungen 6.

Die Bodenplatten der Mieten sind V-förmig ausgebildet, wodurch ein leichtes Gefälle zu der zentralen Entwässerungsrinne 7 zur Flüssigkeitsabfuhr entsteht. Über komplexe Stoffstrukturen im Gemisch des Austauschfilters werden organische Partikel herausgefiltert und Nährstoffe absorbiert und angelagert.

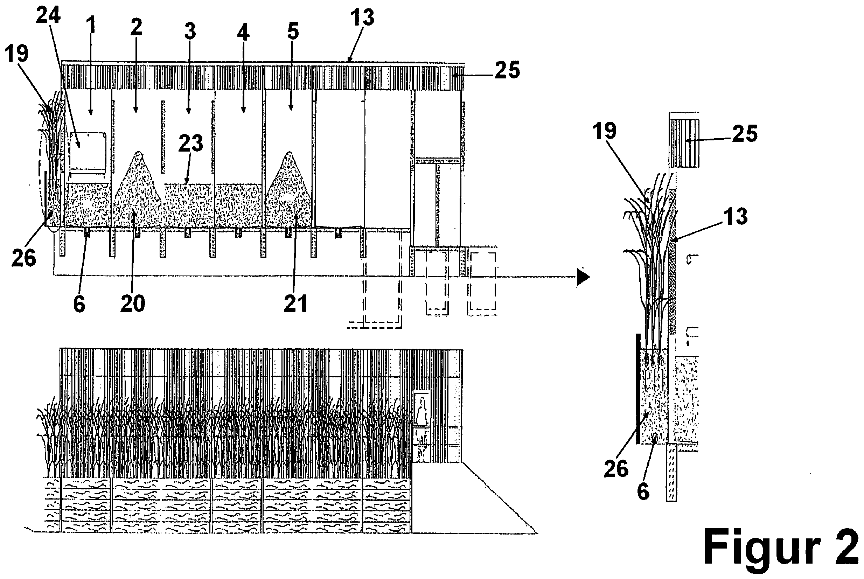

Für ein optimales Ergebnis werden bei der Austauschfiltration 10 Vol.-% Holzkohle, 10 Vol.-% mineralische Bestandteile (z. B. Lava, Ton, Bims) und 80 Vol.-% organische Biomasse (z.B. feiner Grünschnitt) zusammengemischt und für etwa eine Woche mit flüssigen nährstoffreichen Biomassen z.B. Gärreste, Gülle, Schmutz- und Abwässer usw. beaufschlagt. Danach folgt eine Intensivrottephase in der Miete 2 für etwa drei bis sieben Tage. Die Intensivrotte kann jedoch auch oder zusätzlich nach der Fermentation erfolgen. In der Intensivrotte findet eine Hygienisierung und Abtötung der keimfähigen Samen statt. Gegebenenfalls kann neue Biomasse (z. B. Grünschnitt, mineralische Bestandteile, Silage) zur Intensivrotte zugegeben werden. Die Temperaturen betragen mehr als 60 °C, bevorzugt sind 70 °C. Die Biomasse wird vorzugsweise zu einem Spitzhaufen 20, 21 und/oder einer Dreiecksmiete angehäuft, um eine große Austauschfläche für Luft bereitzustellen (vgl. Fig. 2).

Die Fermentationphase mit einer anaeroben Milchsäuregärung wird in den beiden Fermentern 3 und 4 durchgeführt. Die Milchsäuregärung erfolgt bei einer Temperatur von vorzugsweise 30 bis 40 °C für eine Dauer von etwa einer bis 3 Wochen. Um anaerobe Milieubedingungen sicherzustellen, wird die Miete mit einer Folie luftdicht abgedeckt. Der pH-Wert sinkt während des Fermentationsprozesses auf unterhalb 4. Sämtliche Drainageöffnungen 6 sind während der Fermentationphase geschlossen, damit kein Sauerstoff die anaeroben Bedingungen stören kann. Nach der Fermentation erfolgt eine Trocknung und Neutralisation in der Trocknungsmiete 5. Die Trocknung dauert etwa eine Woche und kann durch Zuführung von Luft über die Be- und Entlüftungsvorrichtung optimiert werden. Die Neutralisation erfolgt durch Zugabe neutralisierender Substanzen, wie z. B. Kalk, Zeolith, Bentonit oder Gesteinsmehl.

Zur Aufrechterhaltung der Temperatur sind die einzelnen Mieten 1, 2, 3, 4, 5 mit Bodenheizungen und/oder Wärmeschläuchen versehen. Auf diese Weise können die einzelnen Mieten 1, 2, 3, 4, 5 flexibel eingesetzt werden, d. h. jede einzelne Miete kann entweder als Austauschfilter, Intensivrotte, Fermenter oder Trockungsmiete genutzt werden. Auch ein Batch-Verfahren ist denkbar, sodass der gesamte Verfahrensablauf in derselben Miete durchgeführt wird. Bei der Nutzung von fünf Mieten wären daher fünf parallele Verfahrensabläufe zur Herstellung des erfindungsgemäßen Kultursubstrates oder Bodenhilfsstoffes oder organischen Düngers möglich.

Die Versorgung der Bodenheizung und/oder Wärmeschläuche zur Temperaturregelung erfolgt in der gezeigten Ausführungsform über einen Pufferspeicher 11. Die darunter gezeigte Zisterne 12 dient zur Lagerung von Brauchwasser (z. B. Regenwasser von Dachrinnen der Umhausung 13). Die gesamte Anlage ist von einer Umhausung 13 umfasst. Außerhalb der Umhausung 13 ist ein Hochbeet als Bodenfilter 26 angelegt. Das Hochbeet bzw. der Bodenfilter 26 ist wiederum über Drainageöffnungen 6 mit den einzelnen Mieten 1, 2, 3, 4, 5 kommunizierend verbunden. Die Drainageöffnungen 6 können über die einzelnen Schiebregler unabhängig voneinander geöffnet oder geschlossen werden.

In Fig. 2 erkennt man die erfindungsgemäße Anlage in Seitendarstellung. Im Austauschfilter 1 sowie in den beiden Fermentern 3, 4 ist die Biomasse flach eingebracht. In der Intensivrotte 2 sowie der Trocknungsmiete 5 ist die Biomasse zu einem Spitzhaufen 20 bzw. 21 aufgeschüttet. Dadurch wird eine möglichst große Oberfläche für einen Luftaustausch sowie eine Wasserverdunstung gewährleistet. Außerhalb der Umhausung 13 befindet sich das bereits erwähnte Hochbeet als Bodenfilter 26. Darin befindet sich eine Bepflanzung aus Miscanthus und/oder Bambus und/oder anderen Nutzpflanzen 19, welche in einem Terra Preta-Kultursubstrat eingepflanzt sind. Das Hochbeet behandelt Flüssigkeiten aus den Produktionsprozessen und wandelt Gase aus der Abluft (z.B. Ammoniak) in stabile Stickstoffverbindungen (z. B. AmmoniumIonen) um. Am Innenfirst der Umhausung 13 befindet sich ein Entlüftungssystem 25.

## Patentansprüche

1. Ökotechnische Anlage zur Herstellung von Kultursubstraten und/oder Bodenhilfsstoffen und/oder organischen Düngern mit Eigenschaften anthropogener Terra Preta, umfassend:
- wenigstens einen Fermenter (3, 4) in dem unbelastete feste und flüssige organische Biomassen, Bioabfälle, Schmutz- und Abwässer, mineralische Stoffe einem anaeroben Fermentationsprozess, insbesondere einer anaeroben Milchsäuregärung ausgesetzt werden, wobei in dem Fermenter (3, 4) zumindest inerter Kohlenstoff mit großen Porenvolumen oder einem Substitut desselben wie Lava, Zeolith, Betonit, Blähton und/oder sonstige poröse Materialien enthalten sind,
- eine dem wenigstens einen Fermenter (3, 4) vorgeschaltete Miete mit einem biologischen Austauschfilter (1) für flüssige organische Biomassen wie Gärreste, Gülle, Schlempe, Schmutz- und Abwässer, der in seiner Grundstruktur aus organischer Biomasse und mineralischen Materialien und inertem Kohlenstoff mit großem Porenvolumen wie Holzkohle oder HTC-Kohlenstoff besteht und über dem die flüssigen organischen Biomassen geleitet werden,
- wenigstens eine Miete (2) für die Durchführung einer Intensivrotte zur Hygienisierung und Abtötung keimfähiger Samen über Temperaturerhöhung, und wenigstens eine Trocknungsmiete (5) zur Trocknung und Neutralisation der fermentierten Biomasse,
- Entwässerungssysteme (7) für die einzelnen Mieten (1, 2, 5) zur Abführung von Flüssigkeit.

2. Anlage nach Anspruch 1, **dadurch gekennzeichnet, dass** die Anlage zusätzlich eine mechanische Separationsvorrichtung umfasst, in der die flüssige Biomasse vorgesiebt und in eine feste und flüssige Phase getrennt wird.

3. Anlage nach einem der vorhergehenden Ansprüche, **dadurch gekennzeichnet, dass** der Austauschfilter aus 5 bis 30 Vol.-% inerter Kohlenstoff mit großen Porenvolumen oder einem Substitut desselben, 1 bis 30 Vol.-% mineralischen Bestandteilen und 40 bis 94 Vol.-% organischer Biomasse besteht.

4. Anlage nach einem der vorhergehenden Ansprüche, **dadurch gekennzeichnet, dass** die Bodenplatte der Mieten Sickeröffnungen mit einer darunter liegenden Wanne besitzt oder V-förmig ausgebildet ist und in eine zentrale Entwässerungsrinne (7) mündet, welche zu einem Sammelschacht (10) oder einem Lagerschacht (9) für Flüssigkeit führt.

5. Anlage einem der vorhergehenden Ansprüche, **dadurch gekennzeichnet, dass** die Mieten (1, 2, 5) mit regelbaren Belüftungs-/Entlüftungssystemen, Be-/Entwässerungssystemen und/oder mit Bodenheizungen und/oder Wärmeschläuchen zur Beheizung und Temperaturregelung ausgerüstet sind.

6. Anlage nach einem der vorhergehenden Ansprüche, **dadurch gekennzeichnet, dass** die Anlage von einer Umhausung (13) umfasst ist, wobei die Behandlungsstufen von der Umhausung (13), vorzugsweise einem Gewächshaus, eingefasst sind, die mit einem Entlüftungssystem (25) ausgestattet ist.

7. Anlage einem der vorhergehenden Ansprüche, **dadurch gekennzeichnet, dass** die Anlage von einer Umhausung (13) umfasst ist, wobei sich ein Bodenfilter (26) am Außenrand der Umhausung (13) und/oder in der Nähe der Anlage befindet, wobei der Bodenfilter (26) ein Hochbeet, Erdbecken oder eingedämmt sein kann und mit mehrjährigen Nutzpflanzen wie Miscanthus, Bambus, Gräser, Obst, Beeren bepflanzt ist und an der Sohle eine Belüftungs- und Entwässerungsdrainage (6) besitzt.

8. Anlage nach einem der vorhergehenden Ansprüche, **dadurch gekennzeichnet, dass** die Anlage zusätzlich eine Pyrolyseanlage zur Herstellung des inerten Kohlenstoff oder eine Hydrothermale Karbonisierung (HTC)-Anlage umfasst.

9. Verfahren zur Herstellung von Kultursubstraten oder Bodenhilfsstoffen oder organischen Düngern mit Eigenschaften anthropogener Terra Preta, **dadurch gekennzeichnet dass**:
- in einer ersten Stufe flüssige organische Biomasse wie Gärreste, Gülle, Schlempe, Schmutz- und Abwässer über einen biologischen Austauschfilter geleitet wird, der in seiner Grundstruktur aus organischer Biomasse und mineralischen Materialien und inertem Kohlenstoff mit großem Porenvolumen wie Holzkohle oder HTC-Kohlenstoff aufgebaut wird;
- in einer zweiten Stufe eine Intensivrotte zur Hygenisierung und Abtötung keimfähiger Samen durch Temperaturerhöhung durchgeführt wird;
- in einer dritten Stufe die unbelasteten festen und flüssigen organischen Biomassen, Bioabfälle, Schmutz- und Abwässer, mineralischen Stoffe wenigstens einem anaeroben Fermentationsprozess, insbesondere einer anaeroben Milchsäuregärung, ausgesetzt werden, wobei in der Fermentationsstufe zumindest inerter Kohlenstoff mit großen Porenvolumen oder einem Substitut desselben wie Lava, Zeolith, Betonit, Blähton und/oder sonstige poröse Materialien eingesetzt werden;
- in einer vierten Stufe eine Trocknung und Neutralisierung der fermentierten Biomasse erfolgt.

10. Verfahren nach Anspruch 9, **dadurch gekennzeichnet, dass** die flüssige Biomasse einer mechanischen Separationsstufe ausgesetzt wird, bei der die Biomasse in eine feste und flüssige Phase getrennt wird.

11. Verfahren einem der vorhergehenden Ansprüche, **dadurch gekennzeichnet, dass** der flüssigen Biomasse Zuschlagsstoffe wie Gesteine, Erden, Böden, Lava, Bims, Basalt, Ton, Lehm, Bentonit, Kalk, Sandsteingrieß, und/oder Magnesiumchlorid, und/oder organische Faserprodukte zugemengt werden.

12. Verfahren nach einem der vorhergehenden Ansprüche, **dadurch gekennzeichnet, dass** mehrere Austauschfilterstufen nacheinander in Reihe folgen, welche aus festen organischen Biomassen, mineralischen Materialien und inertem Kohlenstoff bestehen und von der flüssigen Biomasse nacheinander in Reihe durchströmt werden.

13. Verfahren nach einem der vorhergehenden Ansprüche, **dadurch gekennzeichnet, dass** die Intensivrotte vor oder nach dem Fermentationsprozess durchgeführt wird.

14. Verfahren nach einem der vorhergehenden Ansprüche, **dadurch gekennzeichnet, dass** zu der zu fermentierenden Biomasse in dem Fermenter Milchsäurebakterien zur Durchführung einer anaeroben Milchsäuregärung zugemengt werden.

15. Verfahren nach einem der vorhergehenden Ansprüche, **dadurch gekennzeichnet, dass** die Neutralisierung in der Trocknungsstufe durch Zugabe von Kalk, Zeolith, Bentonit und/oder Gesteinsmehl erfolgt.

16. Verfahren nach einem der vorhergehenden Ansprüche, **dadurch gekennzeichnet, dass** die Filtration, Intensivrotte, Fermentation und/oder Trocknung in derselben Box, Behälter oder Miete im Batch-Verfahren oder in getrennten Boxen, Behältern oder Mieten durchgeführt wird.

17. Verfahren einem der vorhergehenden Ansprüche, **dadurch gekennzeichnet, dass** die Boxen, Behälter oder Mieten belüftet, beheizt und/oder entwässert werden.

18. Verwendung einer Anlage nach einem der Ansprüche 1 bis 8 oder eines Verfahrens nach einem der Ansprüche 10 bis 18 zur Herstellung eines Kultursubstrats und/oder Bodenhilfsstoffs und/oder organischen Düngers.

19. Verwendung einer Anlage nach einem der Ansprüche 1 bis 8 oder eines Verfahrens nach einem der Ansprüche 10 bis 18 zur Verwertung von unbelasteten organischen Biomassen, Bioabfällen, Schmutz- und Abwässern, mineralischen Stoffen zu Strom, Wärme und/oder Kultursubstraten und/oder Bodenhilfsstoffen und/oder organischen Düngern mit Eigenschaften anthropogener Terra Preta.

20. Kreislaufanlage im Sinne eines nachhaltigen Stoffstrommanagements zur Verwertung von unbelasteten organischen Biomassen, Bioabfällen, mineralischen Stoffen usw. zu Strom, Wärme, Brauchwasser und Kultursubstraten oder Bodenhilfsstoffen oder organischen Düngern, umfassend eine Biogasanlage und/oder Kompostanlage und/oder Verarbeitungsanlage für organische Biomassen und/oder eine Energiepflanzenplantage, **dadurch gekennzeichnet, dass** die Kreislaufanlage ferner eine Anlage zur Herstellung von Kultursubstraten und/oder Bodenhilfsstoffen und/oder organischen Düngern mit Eigenschaften anthropogener Terra Preta gemäß einem der Ansprüche 1 bis 8 umfasst.

## Claims

1. Ecotechnical installation for producing cultivation substrates and/or soil amendments and/or organic fertilisers having properties of anthropogenic Terra Preta soils, comprising:
- at least one fermenter (3, 4), in which uncontaminated solid and liquid organic biomasses, biological waste, waste water and sewage, mineral substances are exposed to an anaerobic fermentation process, in particular anaerobic lactic acid zymosis, wherein at least inert carbon with a large pore volume or a substitute of the same such as lava, zeolite, bentonite, expanded clay and/or other porous materials are included in the fermenter (3, 4),
- a clamp with a biological replacement filter (1) positioned upstream of the at least one fermenter (3, 4) for liquid organic biomasses such as zymosis residues, slurry, slop, waste water and sewage, which consists of organic biomass and mineral materials and inert carbon with a large pore volume such as charcoal or HTC carbon in its base structure, and over which the liquid organic biomass is routed,
- at least one clamp (2) for carrying out intensive rotting for sanitising and killing germinable seeds by means of temperature increase, and at least one drying clamp (5) for drying and neutralising the fermented biomass.
- Drainage systems (7) for individual clamps (1, 2, 5) for draining off liquid.

2. Installation according to claim 1, **characterised in that** the installation additionally comprises a mechanical separation device, in which the liquid biomasses are pre-sieved and separated into a solid and a liquid phase.

3. Installation according to one of the preceding claims, **characterised in that** the replacement filter consists of 5 to 30 vol. % inert carbon with a large pore volume or a substitute of the same, 1 to 30 vol. % mineral components and 40 to 94 vol. % organic biomass.

4. Installation according to one of the preceding claims, **characterised in that** the floor plate of the clamps has drainage openings with an underlying trough or is of a V-shaped design and opens into a central drainage groove (7), which leads to a collection shaft (10) or a storage shaft (9) for liquid.

5. Installation of one of the preceding claims, **characterised in that** clamps (1, 2, 5) are equipped with controllable ventilation/venting systems, irrigation/drainage systems and/or with floor heating and/or heating coils for heating and temperature control.

6. Installation according to one of the preceding claims, **characterised in that** the installation is located in an enclosure (13), wherein the treatment steps are enclosed by said enclosure (13), preferably a greenhouse, which is equipped with a ventilation system (25).

7. Installation of one of the preceding claims, **characterised in that** the installation is located in an enclosure (13), wherein a floor filter (26) is positioned on the outer edge of the enclosure (13) and/or in the vicinity of the installation, wherein the floor filter (26) is a raised bed, an earth pit or can be banked up, and is planted with perennial agricultural crops such as miscanthus, bamboo, grasses, fruit, berries, and has a ventilation and drainage system (6) at its bottom.

8. Installation according to one of the preceding claims, **characterised in that** the installation additionally comprises a pyrolisis system for producing the inert carbon or a hydrothermal carbonisation (HTC) system.

9. Method for producing cultivation substrates or soil amendments or organic fertilisers having properties of anthropogenic Terra Preta soils, **characterised in that**:
- organic biomasses such as zymosis residues, slurry, slop, waste water and sewage are routed across a biological replacement filter in a first step, the base structure of which is constructed from organic biomass and mineral materials and inert carbon with a large pore volume such as charcoal or HTC carbon;
- intensive rotting and killing of germinable seeds through temperature increase is carried out during a second step;
- uncontaminated solid and liquid organic biomasses, biological waste, waste water and sewage, mineral substances are exposed to at least one anaerobic fermentation process, in particular anaerobic lactic acid zymosis during a third step, wherein at least inert carbon with a large pore volume or a substitute of the same such as lava, zeolite, bentonite, expanded clay and/or other porous materials is included in the fermentation step,
- drying and neutralising of the fermented biomass takes place during the fourth step.

10. Method according to claim 9, **characterised in that** the liquid biomass is subjected to a mechanical separation step, where the biomass is separated into a solid and a liquid phase.

11. Method of one of the preceding claims, **characterised in that** additives such as rock, earth, soil, lava, pumice, basalt, clay, loam, bentonite, chalk, sandstone grit and/or magnesium chloride and/or organic fibre products are admixed with the liquid biomass.

12. Method according to one of the preceding claims, **characterised in that** several replacement filters follow one after the other in sequence, which consist of organic biomasses, mineral materials and inert carbon and through which the liquid biomass flows one after the other in sequence.

13. Method according to one of the preceding claims, **characterised in that** intensive rotting is carried out prior to or after the fermentation process.

14. Method according to one of the preceding claims, **characterised in that** lactic acid bacteria is admixed with biomass to be fermented in the fermenter for carrying out anaerobic lactic acid zymosis.

15. Method according to one of the preceding claims, **characterised in that** neutralisation takes place during the drying step through adding chalk, zeolite, bentonite and/or rock powder.

16. Method according to one of the preceding claims, **characterised in that** filtration, intensive rotting, fermentation and/or drying is carried out in the same box, container or clamp by means of a batch process or in separate boxes, containers or clamps.

17. Method of one of the preceding claims, **characterised in that** the boxes, containers or clamps are ventilated, heated and/or drained.

18. Use of an installation according to one of the claims 1 to 8 or a method according to one of the claims 10 to 18 for producing a cultivation substrate and/or soil amendments and/or organic fertiliser.

19. Use of an installation according to one of the claims 1 to 8 or a method according to one of the claims 10 to 18 for converting uncontaminated organic biomasses, biological waste, waste water and sewage, mineral substances into electricity, heat and/or cultivation substrates and/or soil amendments and/or organic fertilisers having properties of anthropogenic Terra Preta soils.

20. Recirculating system in the sense of sustainable substance flow management for converting uncontaminated organic biomasses, biological waste, mineral substances etc. into electricity, heat, process water and cultivation substrates or soil amendments or organic fertilisers, comprising a biogas system and/or composting plant and/or a processing plant for organic biomasses and/or an energy plant plantation, **characterised in that** the recirculating system further comprises a system for producing cultivation substrates and/or soil amendments and/or organic fertilisers having properties of anthropogenic Terra Preta soils according to one of the claims 1 to 8.

## Revendications

1. Installation écologique pour la fabrication de substrats de culture et/ou d'adjuvants pour sol et/ou d'engrais organiques présentant des propriétés anthropogéniques de Terra Preta, comprenant
- au moins un fermenteur (3, 4) dans lequel des biomasses organiques solides ou liquides non chargées, des déchets biologiques, des boues et des eaux usées, des substances minérales, sont soumises à un processus de fermentation anaérobie, en particulier à une fermentation lactique anaérobie, dans laquelle au moins du carbone inerte avec un grand volume de pores ou un substitut de celui-ci comme la lave, les zéolithes, la bentonite, l'argile expansée et/ou d'autres matériaux poreux sont contenus dans le fermenteur (3, 4),
- un tas installé avant ledit au moins un fermenteur (3, 4) avec un filtre échangeur biologique (1) pour des biomasses organiques liquides comme des résidus de carbonisation, du lisier, des drêches, des boues et des eaux usées, qui se compose dans sa structure de base de biomasse organique et de matières minérales et de carbone inerte avec un grand volume de pores comme du charbon de bois ou du carbone HTC et sur lequel les biomasses organiques liquides sont conduites,
- au moins un tas (2) pour la réalisation d'un pourrissage intensif pour l'hygiénisation et la destruction de semences germinatives par une augmentation de la température, et au moins un tas de séchage (5) pour le séchage et la neutralisation de la biomasse fermentée,
- des systèmes de drainage (7) pour les tas individuels (1, 2, 5) afin d'éliminer le liquide.

2. Installation selon la revendication 1, **caractérisée en ce que** l'installation comprend en outre un dispositif de séparation mécanique, dans lequel la biomasse liquide est préfiltrée et est séparée en une phase solide et une phase liquide.

3. Installation selon l'une quelconque des revendications précédentes, **caractérisée en ce que** le filtre échangeur se compose de 5 % à 30 % en volume de carbone inerte avec un grand volume de pores ou d'un substitut de celui-ci, de 1 % à 30 % en volume de composants minéraux et de 40 % à 94 % en volume de biomasse organique.

4. Installation selon l'une quelconque des revendications précédentes, **caractérisée en ce que** la plaque de base des tas comporte des ouvertures de drainage avec une cuvette sous-jacente ou est réalisée en forme de V et débouche dans une rigole de drainage centrale (7), qui conduit à un puits collecteur (10) ou à un puits de stockage (9) pour le liquide.

5. Installation selon l'une quelconque des revendications précédentes, **caractérisée en ce que** les tas (1, 2, 5) sont équipés de systèmes d'aération/ventilation réglables, de systèmes d'hydratation/drainage réglables et/ou de chauffages de fond et/ou de tuyaux flexibles de chauffage pour le chauffage et la régulation de la température.

6. Installation selon l'une quelconque des revendications précédentes, **caractérisée en ce que** l'installation est entourée par une enceinte (13), dans laquelle les étapes de traitement sont entourées par l'enceinte (13), de préférence une serre, qui est équipée d'un système de ventilation (25).

7. Installation selon l'une quelconque des revendications précédentes, **caractérisée en ce que** l'installation est entourée par une enceinte (13), dans laquelle un filtre de fond (26) se trouve au bord extérieur de l'enceinte (13) et/ou à proximité de l'installation, dans laquelle le filtre de fond (26) peut être un lit surélevé, un bassin de décantation ou être endigué, et est garni de plantes utiles vivaces comme le miscanthus, le bambou, des herbes, des fruits, des baies et a à sa base un système d'aération et de drainage (6).

8. Installation selon l'une quelconque des revendications précédentes, **caractérisée en ce que** l'installation comprend en outre une installation de pyrolyse pour la production de carbone inerte ou une installation de carbonisation hydrothermale (HTC).

9. Procédé de fabrication de substrats de culture ou d'adjuvants pour sol ou d'engrais organiques présentant des propriétés anthropogéniques de Terra Preta, **caractérisé en ce que**:
- dans une première étape on conduit des biomasses organiques liquides, comme des résidus de carbonisation, du lisier, des drêches, des boues et des eaux usées sur un filtre échangeur biologique, qui dans sa structure de base est constitué de biomasse organique et de matières minérales et de carbone inerte avec un grand volume de pores comme du charbon de bois ou du carbone HTC;
- dans une deuxième étape, on effectue un pourrissage intensif pour l'hygiénisation et la destruction de semences germinatives par une augmentation de la température;
- dans une troisième étape, on soumet les biomasses organiques solides et liquides non chargées, les déchets biologiques, les boues et les eaux usées, les matières minérales, au moins à un processus de fermentation anaérobie, en particulier à une fermentation lactique anaérobie, dans lequel on ajoute dans l'étape de fermentation au moins du carbone inerte avec un grand volume de pores ou un substitut de celui-ci, comme la lave, les zéolithes, la bentonite, l'argile expansée et/ou d'autres matériaux poreux;
- dans une quatrième étape on effectue un séchage et une neutralisation de la biomasse fermentée.

10. Procédé selon la revendication 9, **caractérisé en ce que** l'on soumet la biomasse liquide à une étape de séparation mécanique, dans laquelle on sépare la biomasse en une phase solide et une phase liquide.

11. Procédé selon l'une quelconque des revendications précédentes, **caractérisé en ce que** l'on ajoute à la biomasse liquide des substances d'addition comme des roches, des terres, des sols, de la lave, de la pierre ponce, du basalte, de l'argile, du limon, de la bentonite, de la chaux, du gravier de grès, et/ou du chlorure de magnésium, et/ou des produits fibreux organiques.

12. Procédé selon l'une quelconque des revendications précédentes, **caractérisé en ce que** plusieurs étages de filtres échangeurs se suivent en série, lesquels sont constitués de biomasses organiques solides, de matières minérales et de carbone inerte et sont traversés l'un après l'autre en série par la biomasse liquide.

13. Procédé selon l'une quelconque des revendications précédentes, **caractérisé en ce que** l'on effectue le pourrissage intensif avant ou après le processus de fermentation.

14. Procédé selon l'une quelconque des revendications précédentes, **caractérisé en ce que** l'on ajoute des bactéries d'acide lactique à la biomasse à fermenter dans le fermenteur pour effectuer une fermentation lactique anaérobie.

15. Procédé selon l'une quelconque des revendications précédentes, **caractérisé en ce que** l'on effectue la neutralisation dans l'étape de séchage par ajout de chaux, de zéolithe, de bentonite et/ou de farine de roche.

16. Procédé selon l'une quelconque des revendications précédentes, **caractérisé en ce que** l'on effectue la filtration, le pourrissage intensif, la fermentation et/ou le séchage dans le même caisson, récipient ou tas en procédant par lots ou dans des caissons, des récipients ou des tas séparés.

17. Procédé selon l'une quelconque des revendications précédentes, **caractérisé en ce que** l'on aère, on chauffe et/ou on draine les caissons, les récipients et les tas.

18. Utilisation d'une installation selon l'une quelconque des revendications 1 à 8 ou d'un procédé selon l'une quelconque des revendications 10 à 18 pour la fabrication d'un substrat de culture et/ou d'un adjuvant pour sol et/ou d'un engrais organique.

19. Utilisation d'une installation selon l'une quelconque des revendications 1 à 8 ou d'un procédé selon l'une quelconque des revendications 10 à 18 pour la valorisation de biomasses organiques non chargées, de déchets biologiques, de boues et d'eaux usées, de substances minérales en courant électrique, chaleur et/ou substrats de culture et/ou adjuvants pour sol et/ou engrais organiques présentant des propriétés anthropogéniques de Terra Preta.

20. Installation en circuit fermé au sens d'une gestion permanente d'un curant de substances pour la valorisation de biomasses organiques non chargées, de déchets biologiques, de substances minérales etc. en courant électrique, chaleur, eau utilitaire et substrats de culture ou adjuvants pour sol ou engrais organiques, comprenant une installation de biogaz et/ou une installation de compostage et/ou une installation de traitement de biomasses organiques et/ou une plantation de plantes énergétiques, **caractérisée en ce que** l'installation en circuit fermé comprend en outre une installation de fabrication de substrats de culture et/ou d'adjuvants pour sol et/ou d'engrais organiques présentant des propriétés de Terra Preta selon l'une quelconque des revendications 1 à 8.
